# EUROPÄISCHE PATENTSCHRIFT

(11) **EP 1 286 853 B1**
(45) Veröffentlichungstag und Bekanntmachung des Hinweises auf die Patenterteilung: **05.11.2008**
(21) Anmeldenummer: 02747261.2
(22) Anmeldetag: 22.03.2002
(51) Int. Cl.: B60N 2/20

(54) **BESCHLAG FÜR EINEN FAHRZEUGSITZ**
FITTING FOR A VEHICLE SEAT
DISPOSITIF D'AJUSTEMENT POUR SIEGE DE VEHICULE

(30) Priorität: 31.03.2001 DE 10116160
(43) Veröffentlichungstag der Anmeldung: 05.03.2003
(73) Patentinhaber: KEIPER GmbH & Co. KG, 67657 Kaiserslautern (DE)
(72) Erfinder: RABBACH, Andreas, 42697 Solingen (DE); WAHLEN, Hilmar, 42499 Hückeswagen (DE)
(74) Vertreter: Patentanwälte Hosenthien-Held und Dr. Held
(86) Internationale Anmeldenummer: PCT/EP2002/003208
(87) Internationale Veröffentlichungsnummer: WO 2002/083450

(56) Entgegenhaltungen:
- DE-A- 3 914 083
- US-A- 4 973 104

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Um bei bekannten Fahrzeugsitzen eine Tischstellung zu erreichen, in welcher die Rückenlehne eine ungefähr horizontale Position einnimmt, ist ein Beschlag konzipiert worden, der einen entriegelbaren Rastbeschlag, wie er zur gewöhnlichen Neigungseinstellung der Rückenlehne gebräuchlich ist, mit einer entriegelbaren, exzentrischen Freischwenkvorrichtung, wie sie für zweitürige Kraftfahrzeuge gebräuchlich ist, kombiniert, um den notwendigen Schwenkwinkel zu erhalten. Nachteilig hierbei ist, daß durch asynchrones Verriegeln des Rastbeschlags die Rückenlehne nach Betätigung der Freischwenkvorrichtung nicht mehr sicher verriegelt, und daß es durch den Einfluß einer zusätzlichen Kraft (Lehnenkompensationsfeder des Rastbeschlags) zu ungewollten Bewegungen des Systems kommen kann, wodurch beispielsweise die Gefahr besteht, daß Finger eingeklemmt werden.

Aus der EP 0 980 785 ist ein Beschlag für einen Fahrzeugsitz mit den Merkmalen des Oberbegriff, des Anspruches 1 bekannt.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß Kopplungsmittel vorgesehen sind, durch welche eine Entriegelung der Freischwenkvorrichtung erst nach einer Entriegelung des Rastbeschlags erfolgt, werden bei einem Fahrzeugsitz mit zwei erfindungsgemäßen Beschlägen die über die Breite des Fahrzeugsitzes hinweg auftretenden Torsionen und Winkelunterschiede beseitigt und ein sicheres Verriegeln beider Rastbeschläge in den gleichen Winkelstellungen gewährleistet. Die Kopplungsmittel können so ausgelegt sein, daß ein zwangsgesteuertes Entriegeln der Freischwenkvorrichtung erfolgt, was auch die Betätigung erleichtert. Die Erfindung kann außer bei einer Tischfunktion auch bei einer gewöhnlichen Freischwenkfunktion verwendet werden, so daß an sich getrennte Betätigungsvorgänge (Neigungseinstellung über kleine Winkel hinweg, Freischwenken über große Winkel hinweg) in einer gemeinsamen Betätigungsmöglichkeit vereint werden können.

Bei einer einfach herzustellenden, gängigen Ausbildung des Rastbeschlags mit Beschlagunterteil und verdrehbarem Beschlagoberteil und einer Ausbildung der exzentrischen Freischwenkvorrichtung mit einer schwenkbaren Klinke oder Haken zum Verriegeln mit einem strukturfesten Bolzen oder dergleichen sind die Kopplungsmittel vorzugsweise zwischen dem Beschlagoberteil und der Klinke vorgesehen, so daß spätestens bei einer bestimmten Winkelstellung der Rückenlehne die Klinke öffnet. Eine vorzugsweise starr ausgebildete und gelenkig angebrachte Koppel hierfür, welche einfach herzustellen und zu montieren ist, also ein kostengünstiges Zugmittel ist, kann mit einer Leerhubeinrichtung versehen sein, beispielsweise einer Schlitz-Zapfen-Führung, um innerhalb verschiedener Gebrauchsstellungen inaktiv zu bleiben und erst bei einem größeren Schwenkwinkel anzusprechen.

Vorzugsweise ist eine Sicherheitseinrichtung vorgesehen, durch welche beim Zurückschwenken der Rückenlehne eine Verriegelung des Rastbeschlags erst nach einer Verriegelung der Freischwenkvorrichtung erfolgt. Bei der genannten gängigen Ausbildung kann die Sicherheitseinrichtung als schwenkbarer, zweiarmiger Hebel ausgebildet sein, welcher mittels des einen Armes die Position des Rastbolzens abfragt und mittels des anderen Armes mit einem in Umfangsrichtung wirksamen Steuerelement des Beschlagoberteils zusammenwirkt, wobei das Steuerelement vorzugsweise bei einem bestimmten Winkel auf dem Beschlagoberteil in der Art einer Stufe oder dergleichen vorgesehen ist. Dadurch wird ein Verriegeln des Rastbeschlags so lange gesperrt, bis die Verriegelung der Freischwenkvorrichtung erfolgt ist. Dies ergänzt die vorwärts wirkenden Kopplungsmittel in die rückwärtige Bewegungsrichtung.

In einer bevorzugten Ausbildung ist noch eine Abfrageeinrichtung vorgesehen, durch welche die Entriegelung und Verriegelung der Freischwenkvorrichtung nur bei bestimmten Einstellungen des Rastbeschlags erfolgt, insbesondere nur, wenn die Rückenlehne relativ zum Sitzteil vorgeschwenkt ist. Damit ist ein Entriegeln der Freischwenkvorrichtung in den Gebrauchsstellungen verhinderbar. Außerdem ist der Bewegungsablauf und die Relativbewegung zwischen den Bauteilen besser steuerbar, beispielsweise kann ein Anschlagen der Rückenlehne am Fahrzeughimmel vermieden werden. Bei der genannten, gängigen Ausbildung kann die Abfrageeinrichtung zwischen der Klinke und einem Steuerelement des Beschlagoberteils wirksam sein, welches sich über einen bestimmten Winkelbereich um die Drehachse herum erstreckt und eine Art Führung für einen Steuerfinger der Klinke bildet. Das Steuerelement, beispielsweise ein langgezogener, gekrümmter Nocken oder eine Steuerscheibe, kann zugleich das Steuerelement für die Sicherheitsvorrichtung bilden.

Die Erfindung ist nicht auf Fahrzeugsitze mit Tischfunktion und Freischwenkfunktion der Rückenlehne beschränkt. Sie ist beispielsweise auch anwendbar, falls für eine Packagestellung oder dergleichen bei einer hinteren Sitzreihe ein Fuß erst dann ausgeklinkt werden soll, wenn die Rückenlehne flach auf das Sitzteil geklappt ist. Die Freischwenkvorrichtung ist dann verallgemeinert als Klappvorrichtung für den gesamten Fahrzeugsitz um den vorderen Fuß zu sehen.

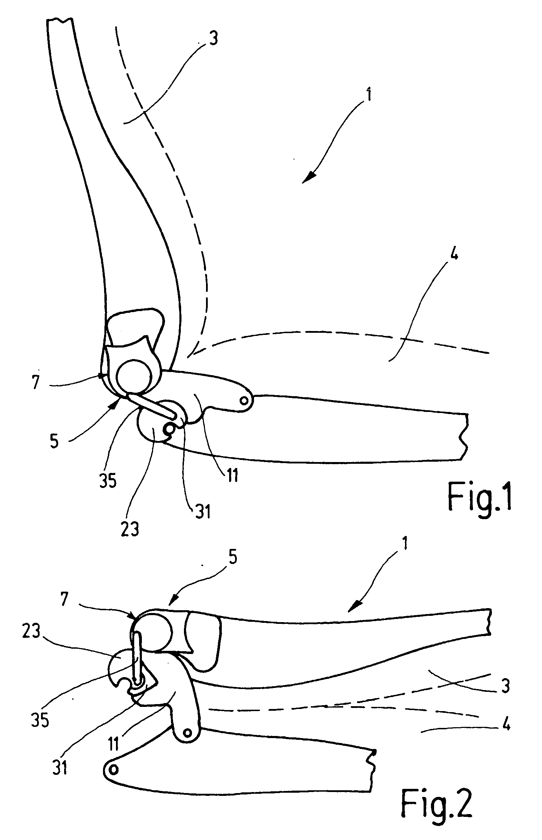

Im folgenden ist die Erfindung anhand zweier in der Zeichnung dargestellten Ausführungsbeispiels näher erläutert. Es zeigen
- Fig. 1: eine Teilansicht der Struktur eines Fahrzeugsitzes mit angedeuteter Polste- rung in einer Gebrauchsstellung,
- Fig. 2: eine Darstellung entsprechend Fig. 1 in der Tischstellung,

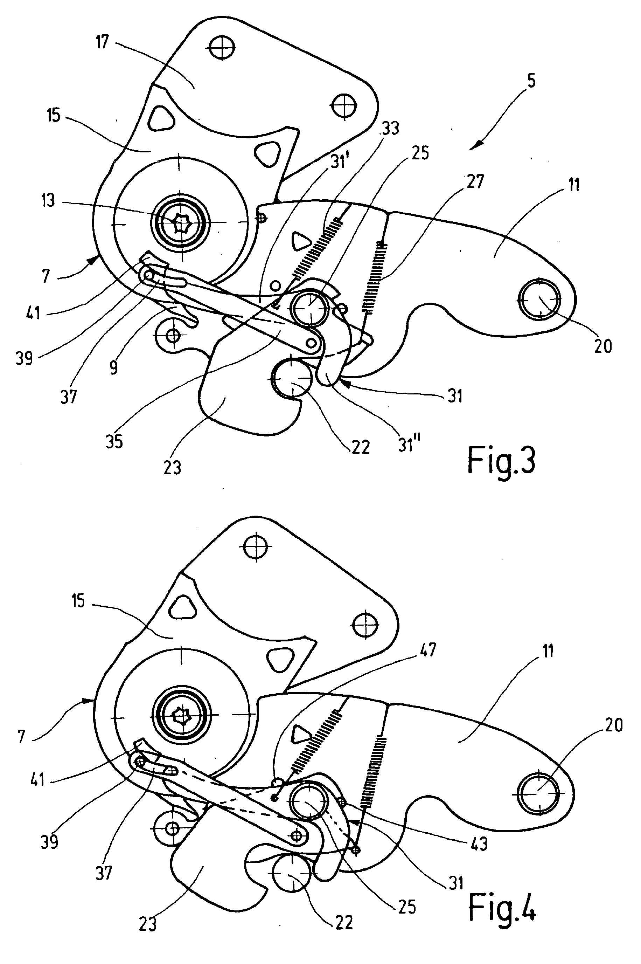

- Fig. 3: eine Ansicht des ersten Ausführungsbeispiels kurz vor dem Entriegeln der Klinke,
- Fig. 4: eine Darstellung entsprechend Fig. 3 kurz nach dem Entriegeln der Klinke,

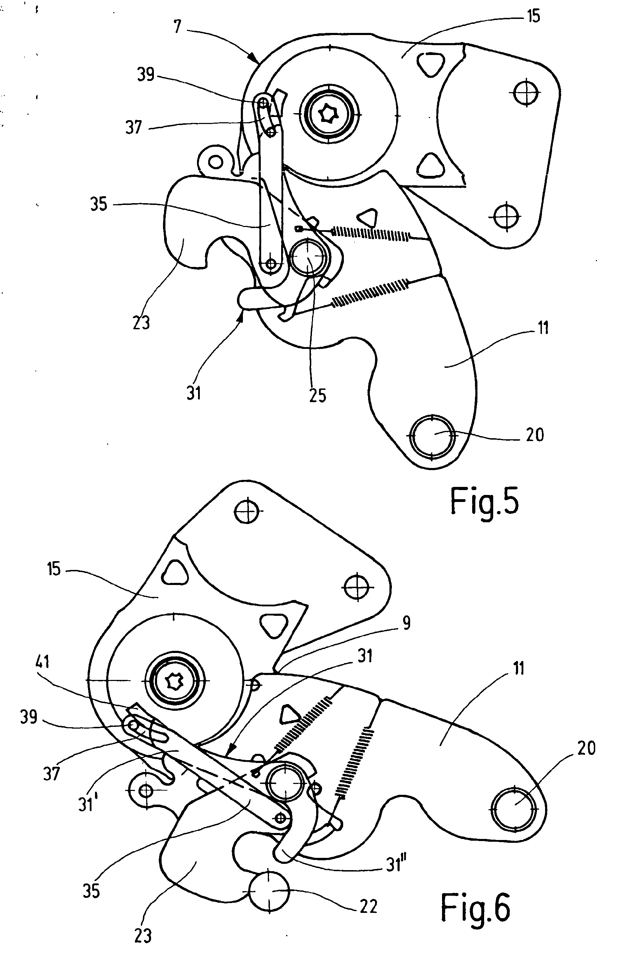

- Fig. 5: eine Darstellung entsprechend Fig. 3 in der Tischstellung,
- Fig. 6: eine Darstellung entsprechend Fig. 3 kurz vor dem Verriegeln der Klinke,

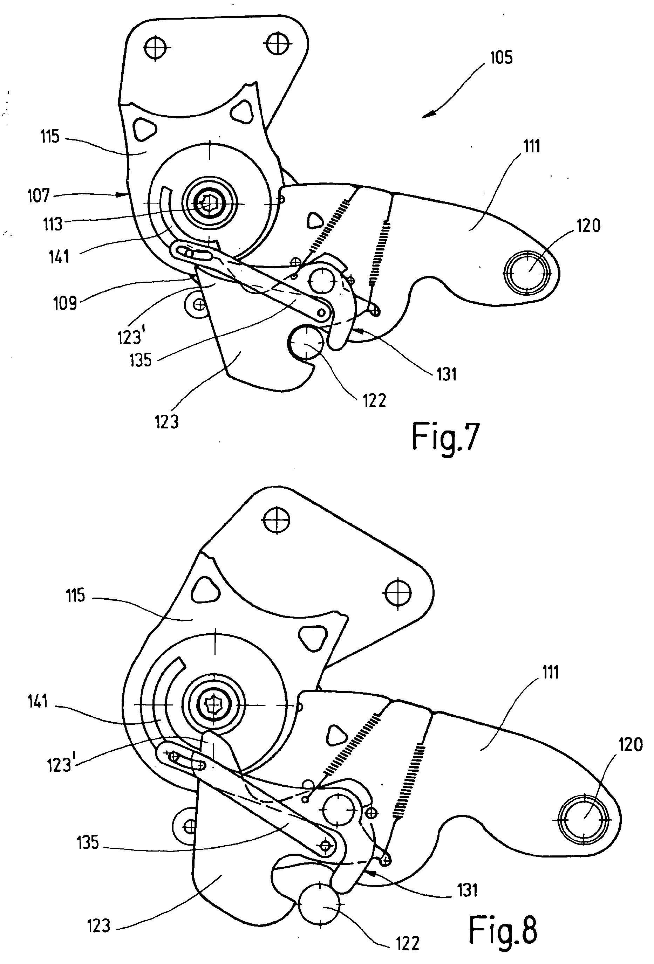

- Fig. 7: eine Ansicht des zweiten Ausführungsbeispiels in einer Gebrauchsstellung, und
- Fig. 8: eine Darstellung entsprechend Fig. 7 kurz nach dem Entriegeln der Klinke.

Ein Fahrzeugsitz 1 für ein Kraftfahrzeug weist im ersten Ausführungsbeispiel für die Einstellung seiner Rückenlehne 3 relativ zu seinem Sitzteil 4 auf seinen beiden Seiten je einen als Ganzes mit 5 bezeichneten Beschlag auf. Die Rückenlehne 3 kann zwischen mehreren Gebrauchsstellungen eingestellt werden, wofür der Beschlag 5 einen Rastbeschlag 7 zur Feineinstellung aufweist. Der Rastbeschlag 7 umfaßt ein Beschlagunterteil 9, welches an einen Adapter 11 angeschweißt ist, und ein um eine Drehachse 13 relativ zum Beschlagunterteil 9 drehbares Beschlagoberteil 15, welches an einen weiteren Adapter 17 zur Befestigung an der Struktur der Rükkenlehne 3 angeschweißt ist. Der Rastbeschlag 7 ist in an sich bekannter Weise mittels nicht dargestellter, beweglicher Riegel ver- und entriegelbar, wobei die Riegel von einer mit der Drehachse 13 fluchtenden Welle gesteuert werden, die zugleich als Übertragungsstange zwischen den Beschlägen 5 auf den beiden Seiten des Fahrzeugsitzes 1 wirkt. Durch Mittel im Inneren des Rastbeschlags 7 ist das Einfallen der Riegel vorzugsweise auf bestimmte Bereiche von Relativwinkelstellungen zwischen Beschlagoberteil 15 und Beschlagunterteil 9 beschränkt.

Der am Beschlagunterteil 9 angebrachte Adapter 11 ist mittels eines Adapterlagerbolzens 20 schwenkbar an der Struktur des Sitzteils 4 angelenkt, beispielsweise am Sitzrahmen. In den Gebrauchsstellungen der Rückenlehne 3 liegt der Adapter 11 auf einem sitzteilstrukturfesten Rastbolzen 22 auf, welcher beispielsweise ebenfalls am Sitzrahmen angebracht ist. Der zylindrische Rastbolzen 22 wird etwa zur Hälfte seines Umfangs von einem in Fahrtrichtung geöffneten Hakenmaul einer Klinke 23 umgriffen, welche mittels eines Klinkenlagerbolzens 25 schwenkbar am Adapter 11 angelenkt ist. Durch eine Feder, welche an einem Ende am Adapter 11 und am anderen Ende exzentrisch an der Klinke 23 eingehängt ist, im folgenden als Klinkenfeder 27 bezeichnet, wird die Klinke 23 in Schließrichtung vorgespannt, d.h. auf den Rastbolzen 22 zu.

Auf dem Klinkenlagerbolzen 25 ist ferner ein Sicherheitshebel 31 schwenkbar gelagert, welcher einen entgegen der Fahrtrichtung nach hinten weisenden langen Arm 31' und einen hierzu nach unten abgewinkelten kurzen Arm 31'' aufweist. Eine Zugfeder, im folgenden als Hebelfeder 33 bezeichnet, greift am langen Arm 31' des Sicherheitshebels 31 an und zieht den kurzen Arm 31'' in Anlage an den Rastbolzen 22. An der Klinke 23 ist exzentrisch zum Klinkenlagerbolzen 25 mit ihrem einen Ende eine Koppel 35 angelenkt, welche bezüglich des Sicherheitshebels 31 auf der von der Klinke 23 abgewandten Seite angeordnet ist. Das andere Ende der Koppel 35 weist ein Langloch 37 auf, welches einen vom Beschlagoberteil 15 abstehenden, bezüglich der Drehachse 13 exzentrisch angeordneten Kopplungszapfen 39 in der Art einer Schlitz-Zapfen-Führung umschließt. Radial zwischen dem Kopplungszapfen 39 und der Drehachse 13 ist in der Ebene des Sicherheitshebels 31 ein Stopnokken 41 am Beschlagoberteil 15 vorgesehen. Der Stopnocken 41 springt vom Beschlagoberteil 15 in axialer Richtung bezüglich der Drehachse 13 zumindest um etwa die Materialstärke des Sicherheitshebels 31 vor.

Zum Freischwenken in zweitürigen Kraftfahrzeugen oder für eine Tischstellung der Rückenlehne 3 oder für eine Packagestellung des Fahrzeugsitzes 1 in einer hinteren Sitzreihe, im folgenden kurz als Freischwenken bezeichnet, kann - vorzugsweise mittels einer manuellen Betätigungsvorrichtung - bei dem Beschlag 5 als Freischwenkvorrichtung die Klinke 23 ausgeklinkt und die Rückenlehne 3 samt Beschlag 5 um den Adapterlagerbolzen 20 nach vorne geschwenkt werden, also exzentrisch bezüglich der Drehachse 13.

Hierzu wird zunächst der Rastbeschlag 7 auf beiden Seiten des Fahrzeugsitzes 1 entriegelt und die Rückenlehne 3 um die Drehachse 13 nach vorne geschwenkt. Dabei bewegt sich der Kopplungszapfen 39 innerhalb des Langlochs 37 an dessen hinteres Ende. Der Rastbeschlag 7 bleibt in diesen Winkelstellungen zwischen Beschlagoberteil 15 und Beschlagunterteil 9 bis auf weiteres entriegelt, auch wenn die Betätigungsvorrichtung losgelassen wird. Nachdem der Kopplungszapfen 39 am Ende des Langlochs 37 angelangt ist, nimmt der Kopplungszapfen 39 über die Koppel 35 die Klinke 23 mit. Die Klinke 23 schwenkt entgegen der Kraft der Klinkenfeder 27 auf bis zur Anlage an einen Klinkenanschlag 43 und gibt den Rastbolzen 22 frei. Das Beschlagoberteil 15 gelangt in Anlage an einen Oberteilanschlag am Adapter 11.

Bei einem weiteren Moment auf die Rückenlehne 3 beginnt der nunmehr entriegelte Adapter 11 unter Mitnahme des gesamten Beschlags 5 um den Adapterlagerbolzen 20 zu schwenken. Sobald durch diese exzentrische Freischwenkbewegung der kurze Arm 31'' sich vom Rastbolzen 22 entfernt, zieht die Hebelfeder 33 den Sicherheitshebel 31 gegen einen Hebelanschlag 47. Das freie Ende des langen Arms 31' des Sicherheitshebels 31 weist nun etwa den gleichen radialen Abstand zur Drehachse 13 wie der Stopnocken 41 auf. Mit dieser Konstellation der Bauteile dauert die Freischwenkbewegung der Rückenlehne 3 um den Adapterlagerbolzen 22 an, bis die gewünschte Endstellung der Rückenlehne 3, beispielsweise die Tischstellung mit einer Anlage der Vorderseite der Rückenlehne 3 an die Oberseite des Sitzteils 4, erreicht ist.

Bei der Rückkehr in eine Gebrauchsstellung schwenkt bei einem Moment auf die Rückenlehne 3 zunächst das Beschlagoberteil 15 um wenige Winkelgrade zurück, bis der Stopnocken 41 in Anlage an das freie Ende des langen Arms 31' des Sicherheitshebels 31 gelangt. Das Beschlagoberteil 15 wird nun relativ zu dem Beschlagunterteil 9 in einer Position gehalten, in welcher es nicht verriegeln kann. Durch die Relativbewegung zwischen Stopnocken 41 und Sicherheitshebel 31 bewegt sich die Koppel 35 geringfügig auf die Klinke 23 zu, so daß diese aufgrund der Kraft der Klinkenfeder 27 etwas in Schließrichtung schwenken kann.

Die Rückenlehne 3 samt Beschlag 5 wird um den Adapterlagerbolzen 20 zurückgeschwenkt, bis eine Anlaufschräge der Klinke 23 in Anlage an den Rastbolzen 22 gelangt, und dann die Klinke 23 entgegen der Kraft der Klinkenfeder 27 unter Ausnutzung der Schlitz-Zapfen-Führung zwischen Langloch 37 und Kopplungszapfen 39 solange in Öffnungsrichtung schwenkt, bis die Klinke 23 mit dem Hakenmaul am Rastbolzen 22 einfallen kann und den Adapter 11 verriegelt. Der Rastbolzen 22 drückt dann den kurzen Arm 31'' des Sicherheitshebels 31 beiseite, wodurch der lange Arm 31' des Sicherheitshebels 31 vom Stopnocken 41 weggeschwenkt wird.

Das Beschlagoberteil 15 kann nun relativ zum Beschlagunterteil 9 in Richtung einer Verriegelungsstellung geschwenkt werden. Der Kopplungszapfen 39 bewegt sich wieder relativ zur Koppel 35 innerhalb deren Langlochs 37. Sobald die Rückenlehne 3 die gewünschte Gebrauchsstellung erreicht hat, kann der Rastbeschlag 7 mit demjenigen auf der anderen Seite des Fahrzeugsitzes 1 synchron verriegeln.

Das zweite Ausführungsbeispiel stimmt weitgehend mit dem ersten Ausführungsbeispiel überein, weshalb gleiche Bauteile um 100 höhere Bezugszeichen tragen. Der Beschlag 105 weist ebenfalls einen Rastbeschlag 107 mit einem Beschlagunterteil 109 und einem relativ zu diesem um eine Drehachse 113 verdrehbaren Beschlagoberteil 115 auf. Der um den sitzteilstrukturfesten Adapterlagerbolzen 120 schwenkbare Adapter 111 ist fest am Beschlagunterteil 109 angebracht. Die Klinke 123 verriegelt mit dem sitzteilstrukturfesten Rastbolzen 122. Die Koppel 135 ist zwischen der Klinke 123 und dem Beschlagoberteil 115 vorgesehen. Beim Zurückschwenken verhindert der Sicherheitshebel 131 ein Verriegeln des Rastbeschlags 107, indem er in Schwenkrichtung in Anlage an einen beschlagoberteilfesten, etwa viertelskreisförmig um die Drehachse 113 gebogenen Steuernocken 141 gelangt, welcher in dieser Funktion dem Stopnocken 41 des ersten Ausführungsbeispiels entspricht. Das Zusammenwirken der genannten Bauteile, auch mit den weiteren übereinstimmenden Bauteilen, erfolgt wie beim ersten Ausführungsbeispiel

Zusätzlich zum ersten Ausführungsbeispiel hat der Steuernocken 141 weitere Funktionen. An der Klinke 123 ist an dem vom Hakenmaul für den Rastbolzen 122 abgewandten Ende ein Steuerfinger 123' vorgesehen. Der Steuernocken 141 springt gegenüber dem Stopnocken 41 des ersten Ausführungsbeispiels vom Beschlagoberteil 115 in axialer Richtung bezüglich der Drehachse 113 zumindest soweit vor, wie es der Summe der Materialstärken von Sicherheitshebel 131 und Steuerfinger 123' entspricht, und erstreckt sich in Umfangsrichtung über einen größeren Winkelbereich.

In den Gebrauchsstellungen befindet sich der Steuerfinger 123' in Anlage an der radial außenliegenden Seite des Steuernockens 141, gleitet bei Schwenkbewegungen des Rastbeschlags 107 an dieser Außenseite des Steuernockens 141 entlang und verhindert damit ein Entriegeln der Klinke 123. Sobald das Beschlagoberteil 115 genügend weit vorgeschwenkt ist, gibt der Steuernocken 141 den Steuerfinger 123' frei, und die Klinke 123 kann in Öffnungsrichtung schwenken. Dabei gelangt der Steuerfinger 123' bezüglich des Rastbeschlags 107 radial weiter nach innen und verhindert nun eine schließende Schwenkbewegung des Beschlagoberteils 115 mit dem Steuernocken 141.

### Bezugszeichenliste

- 1: Fahrzeugsitz
- 3: Rückenlehne
- 4: Sitzteil
- 5,105: Beschlag
- 7, 107: Rastbeschlag
- 9, 109: Beschlagunterteil
- 11, 111: Adapter
- 13,113: Drehachse
- 15, 115: Beschlagoberteil
- 17: weiterer Adapter
- 20, 120: Adapterlagerbolzen
- 22, 122: Rastbolzen
- 23, 123: Klinke
- 25: Klinkenlagerbolzen
- 27: Klinkenfeder
- 31, 131: Sicherheitshebel
- 31': langer Arm
- 31'': kurzer Arm
- 33: Hebelfeder
- 35, 135: Koppel
- 37: Langloch
- 39: Kopplungszapfen
- 41, 141: Stopnocken, Steuernocken, Steuerelement
- 43: Klinkenanschlag
- 47: Hebelanschlag
- 123': Steuerfinger

## Patentansprüche

1. Beschlag für einen Fahrzeugsitz, insbesondere einen Kraftfahrzeugsitz, mit einem verriegelbaren Rastbeschlag (7; 107) zur Feineinstellung der Neigung und Verriegelung einer Rückenlehne (3) zwischen mehreren Gebrauchsstellungen und einer verriegelbaren Freischwenkvorrichtung (11, 22, 23; 111, 122, 123) zur Bewegung der Rückenlehne (3) über die Gebrauchsstellungen hinaus, **dadurch gekennzeichnet, daß** Kopplungsmittel (35; 135) vorgesehen sind, durch welche eine Entriegelung der Freischwenkvorrichtung (11, 22, 23; 111, 122, 123) erst nach einer Entriegelung des Rastbeschlags (7; 107) erfolgt.

2. Beschlag nach Anspruch 1, **dadurch gekennzeichnet, daß** der Rastbeschlag (7; 107) ein relativ zu einem Beschlagunterteil (9; 109) um eine Drehachse (13; 113) verdrehbares Beschlagoberteil (15; 115) und die Freischwenkvorrichtung (11,22,23; 111, 122, 123) eine schwenkbare Klinke (23; 123) zum Verriegeln mit einem strukturfesten Rastbolzen (22; 122) aufweist.

3. Beschlag nach Anspruch 2, **dadurch gekennzeichnet, daß** die Kopplungsmittel (35; 135) zwischen dem Beschlagoberteil (15; 115) und der Klinke (23; 123) vorgesehen sind.

4. Beschlag nach einem der Ansprüche 1 bis 3, **dadurch gekennzeichnet, daß** die Kopplungsmittel (35; 135) als eine starre, gelenkig angebrachte Koppel mit einer Leerhubeinrichtung (37, 39) ausgebildet sind.

5. Beschlag nach einem der Ansprüche 1 bis 4, **dadurch gekennzeichnet, daß** eine Sicherheitseinrichtung (31; 131) vorgesehen ist, durch welche eine Verriegelung des Rastbeschlags (7; 107) erst nach einer Verriegelung der Freischwenkvorrichtung (11, 22, 23; 111, 122, 123) erfolgt.

6. Beschlag nach Anspruch 2 und 5, **dadurch gekennzeichnet, daß** die Sicherheitseinrichtung (31; 131) als schwenkbarer, zweiarmiger Hebel ausgebildet ist, welcher mittels des einen Armes (31'') die Position des Rastbolzens (22; 122) abfragt und mittels des anderen Armes (31') mit einem in Umfangsrichtung wirksamen Steuerelement (41; 141) des Beschlagoberteils (15; 115) zusammenwirkt.

7. Beschlag nach einem der Ansprüche 1 bis 6, **dadurch gekennzeichnet, daß** eine Abfrageeinrichtung (123', 141) vorgesehen ist, durch welche die Entriegelung und Verriegelung der Freischwenkvorrichtung (11, 22, 23; 111, 122, 123) nur bei bestimmten Einstellungen des Rastbeschlags (7; 107) erfolgt.

8. Beschlag nach Anspruch 2 und 7, **dadurch gekennzeichnet, daß** die Abfrageeinrichtung (123', 141) zwischen der Klinke (123) und einem Steuerelement (141) des Beschlagoberteils (115) wirksam ist, welches sich über einen bestimmten Winkelbereich um die Drehachse (113) herum erstreckt.

9. Fahrzeugsitz, insbesondere Kraftfahrzeugsitz, mit einem Beschlag (5; 105) nach einem der Ansprüche 1 bis 8.

## Claims

1. A fitting for a vehicle seat, in particular a motor vehicle seat, having a lockable latching fitting (7; 107) for the fine adjustment of the inclination and locking of a backrest (3) between a plurality of use positions, and a lockable free-pivoting device (11, 22, 23; 111, 122, 123) for moving the backrest (3) beyond the use positions, **characterized in that** coupling means (35; 135) are provided, by means of which unlocking of the free-pivoting device (11, 22, 23; 111, 122, 123) only takes place after unlocking of the latching fitting (7; 107).

2. The fitting as claimed in claim 1, **characterized in that** the latching fitting (7; 107) is a fitting upper part (15; 115), which can be rotated relative to a fitting lower part (9; 109) about an axis of rotation (13; 113), and the free-pivoting device (11,22,23; 111,122,123) has a pivotable catch (23; 123) for locking to a latching bolt (22; 122) fixed on the structure.

3. The fitting as claimed in claim 2, **characterized in that** the coupling means (35; 135) are provided between the fitting upper part (15; 115) and the catch (23; 123).

4. The fitting as claimed in one of claims 1 to 3, **characterized in that** the coupling means (35; 135) are designed as a rigid coupler which is fitted in an articulated manner and has an idle stroke device (37, 39).

5. The fitting as claimed in one of claims 1 to 4, **characterized in that** a safety device (31; 131) is provided, by means of which locking of the latching fitting (7; 107) only takes place after locking of the free-pivoting device (11, 22, 23; 111, 122, 123).

6. The fitting as claimed in claims 2 and 5, **characterized in that** the safety device (31; 131) is designed as a pivotable, two-armed lever which uses the one arm (31'') to monitor the position of the latching bolt (22; 122) and uses the other arm (31') to interact with a control element (41; 141) of the fitting upper part (15; 115), which element is effective in the circumferential direction.

7. The fitting as claimed in one of claims 1 to 6, **characterized in that** a monitoring device (123', 141) is provided, by means of which the unlocking and locking of the free-pivoting device (11, 22, 23; 111, 122, 123) only take place in certain settings of the latching fitting (7; 107).

8. The fitting as claimed in claims 2 and 7, **characterized in that** the monitoring device (123', 141) is effective between the catch (123) and a control element (141) of the fitting upper part (115), which element extends over a certain angular region about the axis of rotation (113).

9. A vehicle seat, in particular motor vehicle seat, having a fitting (5; 105) as claimed in one of claims 1 to 8.

## Revendications

1. Armature pour un siège de véhicule, en particulier un siège de véhicule automobile, comportant une armature à encliquetage verrouillable (7 ; 107) pour le réglage fin de l'inclinaison et le verrouillage d'un dossier (3) entre plusieurs positions d'utilisation et un dispositif de basculement libre verrouillable (11, 22, 23 ; 111, 122, 123) pour le déplacement du dossier (3) au-delà des positions d'utilisation, **caractérisée par le fait que** des moyens de couplage (35 ; 135) sont prévus, par lesquels un déverrouillage du dispositif de basculement libre (11, 22, 23 ; 111, 122, 123) a lieu en premier après un déverrouillage de l'armature à encliquetage (7 ; 107).

2. Armature selon la revendication 1, **caractérisée par le fait que** l'armature à encliquetage (7 ; 107) présente une partie supérieure d'armature (15 ; 115) apte à pivoter autour d'un axe de rotation (13 ; 113) par rapport à une partie inférieure d'armature (9 ; 109) et le dispositif de basculement libre (11, 22, 23 ; 111, 122, 123) présente un cliquet basculable (23 ; 123) pour le verrouillage avec un boulon d'arrêt (22 ; 122) fixé à la structure.

3. Armature selon la revendication 2, **caractérisée par le fait que** les moyens de couplage (35 ; 135) sont prévus entre la partie supérieure d'armature (15 ; 115) et le cliquet (23 ; 123).

4. Armature selon l'une des revendications 1 à 3, **caractérisée par le fait que** les moyens de couplage (35 ; 135) sont réalisés sous la forme d'un couplage rapporté de façon articulée, rigide, avec un dispositif de course à vide (37, 39).

5. Armature selon l'une des revendications 1 à 4, **caractérisée par le fait qu'**un dispositif de sécurité (31 ; 131) est prévu, par lequel un verrouillage de l'armature à encliquetage (7 ; 107) a lieu d'abord après un verrouillage du dispositif de basculement libre (11, 22, 23 ; 111, 122, 123).

6. Armature selon les revendications 2 et 5, **caractérisée par le fait que** le dispositif de sécurité (31 ; 131) est réalisé sous la forme d'un levier à deux bras, basculant, lequel interroge la position du boulon d'arrêt (22 ; 122) au moyen d'un premier bras (31'') et coopère au moyen de l'autre bras (31') avec un élément de commande (41 ; 141) de la partie supérieure de l'armature (15 ; 115), qui est actif dans la direction périphérique.

7. Armature selon l'une des revendications 1 à 6, **caractérisée par le fait qu'**un dispositif d'interrogation (123' ; 141) est prévu, par lequel le verrouillage et le déverrouillage du dispositif de basculement libre (11, 22, 23 ; 111, 122, 123) a lieu seulement lors de réglages définis de l'armature à encliquetage (7 ; 107).

8. Armature selon les revendications 2 et 7, **caractérisée par le fait que** le dispositif d'interrogation (123', 141) est actif entre le cliquet (123) et un élément de commande (141) de la partie supérieure d'armature (115), lequel s'étend sur une plage angulaire définie autour de l'axe de rotation (113).

9. Siège de véhicule, en particulier siège de véhicule automobile, comportant une armature (5 ; 105) telle que définie à l'une des revendications 1 à 8.
